# EUROPÄISCHE PATENTSCHRIFT

(11) **EP 2 684 715 B1**
(45) Veröffentlichungstag und Bekanntmachung des Hinweises auf die Patenterteilung: **01.11.2017**
(21) Anmeldenummer: 13450025.5
(22) Anmeldetag: 02.07.2013
(51) Int. Cl.: B60G 9/02

(54) **Fahrzeug-Achsaufhängung**
Vehicle axle suspension
Suspension d'essieu de véhicule

(30) Priorität: 13.07.2012 AT 7842012
(43) Veröffentlichungstag der Anmeldung: 15.01.2014
(73) Patentinhaber: Scharmüller, Josef, 4892 Fornach (AT); Scharmüller, Josef, jun., 4892 Fornach (AT)
(72) Erfinder: Scharmüller, Josef, 4892 Fornach (AT); Scharmüller, Josef, jun., 4892 Fornach (AT)
(74) Vertreter: Gibler & Poth Patentanwälte KG

(56) Entgegenhaltungen:
- EP-A1- 0 499 887
- EP-A2- 1 151 656
- WO-A1-87/02628
- US-A- 2 732 902
- US-A- 4 220 352
- US-A- 4 415 179
- US-A1- 2008 231 011

## Beschreibung

Die Erfindung betrifft eine Fahrzeug-Achsaufhängung gemäß dem Oberbegriff des Patentanspruches 1.

Es sind Fahrzeug-Achsaufhängungen bekannt, welche eine Achse mit zwei gegenüberliegend angeordneten Rädern aufweisen. Derartige Achsen sind beispielsweise bei landwirtschaftlichen Nutzfahrzeugen oder landwirtschaftlichen Anhängern in Verwendung. In einer Weiterbildung können derartige Fahrzeug-Achsaufhängungen beweglich ausgebildet sein, sodass sich das Fahrzeug besser auf unebenen Untergrund fortbewegen kann.

Nachteilig an derartigen Fahrzeug-Achsaufhängungen ist, dass diese aufwendig in der Konstruktion, und damit fehleranfällig und aufwendig in der Wartung sind.

Die US 2008 231 011 A1, die als nächstliegender Stand der Technik angesehen wird, beschreibt eine aktive Radaufhängung für eine Starrachse eines Traktors, wobei die betreffende Starrachse mittels einer zentralen Strebe mit dem Fahrzeugrahmen verbunden ist. Die Strebe ist dabei am Fahrzeugrahmen um eine Achse, welche parallel zur Fahrzeugachse ist, drehbeweglich gelagert, und an der Achse um eine zu dieser normalen weiteren Achse.

Die US 2 732 902 A1 beschreibt eine Starrachsaufhängung für ein Motorfahrzeug, wobei die Achse mittels einer Strebe mit dem Fahrzeugrahmen verbunden ist. Die Strebe ist dabei zweimal jeweils drehbar gelagert.

Die EP 499 887 A1 beschreibt ein Fahrzeug mit einer Aufhängung einer Starrachse, wobei die Starrachse fest mit einem Träger verbunden ist, welcher beweglich mittels eines einzelnen Kugelgelenks mit dem Fahrzeug verbunden ist.

Die WO 87/02628 A1 zeigt in den Figuren 3a und 3b eine Starrachsradaufhängung, wobei die Starrachse mittels zweier Streben mit dem Fahrzeugrahmen verbunden ist, wobei jedoch die betreffenden Streben sowohl an der Achse als auch am Rahmen drehbar angeordnet sind. Zudem ist ein weiteres Drehgelenkt im Bereich der Starrachse selbst vorgesehen.

Die EP 1 151 656 A2 beschreibt eine Erntemaschine mit einer Starrachse, welche um eine erste Achse, welche normal zur Starrachse angeordnet ist, schwenkbar mit einem Mittelstück verbunden ist, welches Mittelstück selbst um einen zweite Achse, welche parallel zur ersten Achse angeordnet ist, schwenkbar mit einem Maschinenblock das Fahrzeugs verbunden ist.

Die US 4 415 179 A beschreibt ebenfalls eine Starrachsaufhängung wobei die beiden Gelenke an unterschiedlichen Enden des Zentralstrebenelements angeordnet sind. Die US 4 220 352 A1 beschreibt einen Hänger mit einer Starrachse, welche - um eine horizontale Achse schwenkbar - direkt mit einem vertikalen Drehgelenk verbunden ist, in welchem auch die Stoßdämpfung integriert ist.

Aufgabe der Erfindung ist es daher eine Fahrzeug-Achsaufhängung der eingangs genannten Art anzugeben, mit welcher die genannten Nachteile vermieden werden können, welche robust, leicht und besonders einfach in der Herstellung und Wartung ist.

Erfindungsgemäß wird dies durch die Merkmale des Patentanspruches 1 erreicht. Dadurch ergibt sich der Vorteil, dass eine vorteilhafte Fahrzeug-Achsaufhängung bei guter Geländegängigkeit sehr robust, leicht und einfach ausgebildet sein kann. Eine besonders hohe Robustheit wird hierbei dadurch erreicht, dass zwei Gelenke verwendet werden. Dadurch kann die Fahrzeug-Achsaufhängung auf einfache Weise in zwei Richtungen verschwenkbar ausgebildet werden, wobei zwei separate Gelenke, im Vergleich zu einem einzigen Gelenk mit zwei Drehachsen, einfacher und robuster ausgeführt werden können. Weiters kann durch die Lage der beiden Gelenke die Kinematik der Fahrzeug-Achsaufhängung gut vorgegeben werden. Durch die Verwendung zweier Gelenke kann die Aufhängung der Achse mittels des Zentralstrebenelementes besonders platzsparrend erfolgen, wodurch eine etwaige Lenkbewegung der Räder nicht behindert, und dadurch ein besonders geringer Kurvenradius erreicht werden kann.

Weiters betrifft die Erfindung einen Anhänger gemäß dem Patentanspruch 5, wodurch ein Anhänger mit den Vorteilen der Fahrzeug-Achsaufhängung bereitgestellt werden kann.

Die Unteransprüche betreffen weitere vorteilhafte Ausgestaltungen der Erfindung. Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen einer Fahrzeug-Achsaufhängung beispielhaft dargestellt sind, näher beschrieben. Dabei zeigt:
Fig. 1 Ein Beispiel einer Fahrzeug-Achsaufhängung in dreidimensionaler Darstellung;
Fig. 2 das Beispiel aus in dreidimensionaler Darstellung aus einem anderen Blickwinkel;
Fig. 3 das Beispiel in Seitenansicht;
Fig. 4 das Beispiel in Vorderansicht;
Fig. 5 das Beispiel in Draufsicht;
Fig. 6 eine bevorzugte Ausführungsform einer Fahrzeug-Achsaufhängung in dreidimensionaler Darstellung;
Fig. 7 die bevorzugte Ausführungsform aus in dreidimensionaler Darstellung aus einem anderen Blickwinkel;
Fig. 8 die bevorzugte Ausführungsform in Seitenansicht;
Fig. 9 die bevorzugte Ausführungsform in Vorderansicht; und
Fig. 10 die bevorzugte Ausführungsform in Draufsicht.

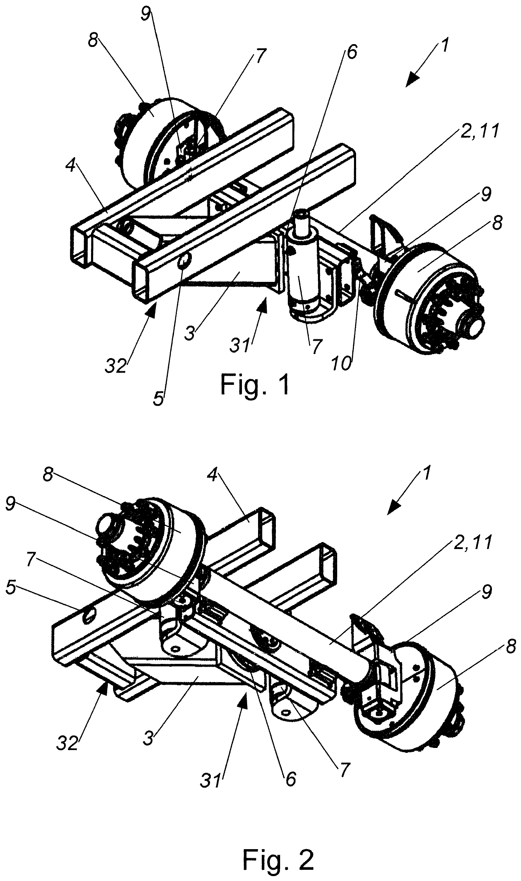

Die Fig. 1 bis 10 zeigen ein Beispiel und eine bevorzugte Ausführungsform einer Fahrzeug-Achsaufhängung 1 mit einer Achse 2 zur Aufnahme jeweils wenigstens eines Rades an gegenüberliegenden Enden. Eine Fahrzeug-Achsaufhängung 1 dient zur, insbesondere beweglichen, Aufhängung einer Achse 2 eines Fahrzeuges. Die Achse 2 weist an den gegenüberliegenden Enden Aufnahmen für jeweils wenigstens einem Rad an jeder Seite auf. Gemäß den bevorzugten Ausführungsformen kann die Anbindung eines Rades an die Achse 2 mittels einer Felge 8 oder einer Radnabe erfolgen.

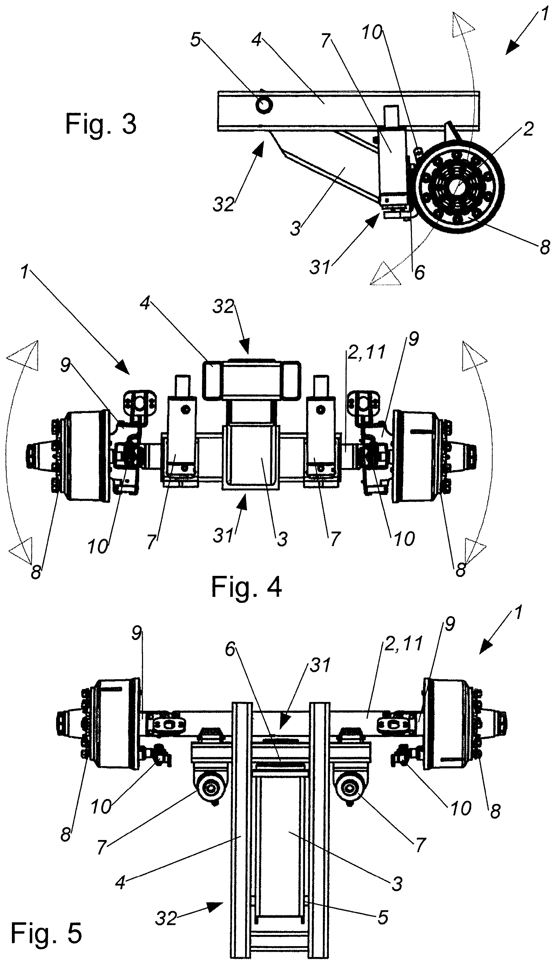

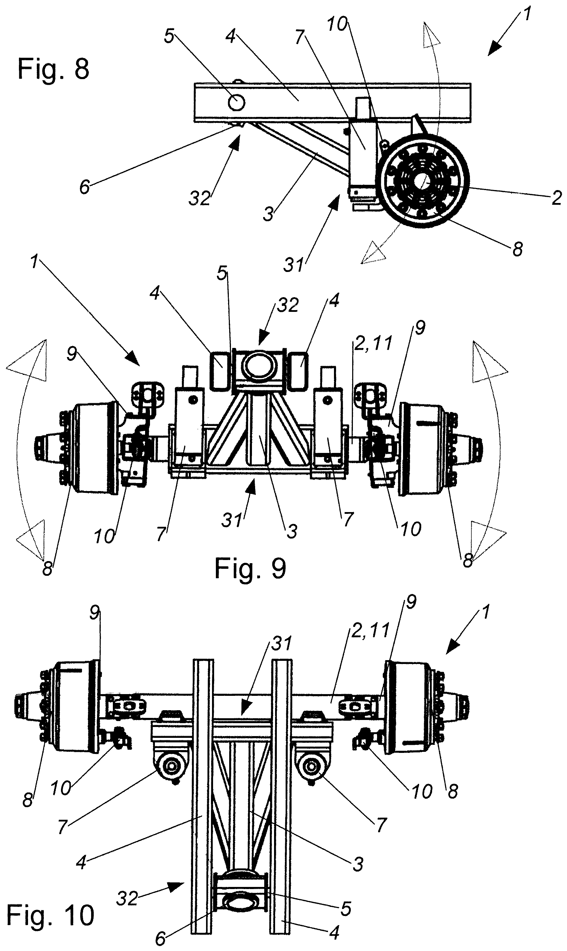

Es ist vorgesehen, dass ein erstes Ende 31 eines Zentralstrebenelementes 3 mit der Achse 2 verbunden ist und ein dem ersten Ende 31 gegenüberliegendes zweites Ende 32 des Zentralstrebenelementes 3 mit einem Fahrzeugrahmen 4 ein erstes Gelenk 5 ausbildend verbunden ist, wobei die Drehachse des ersten Gelenkes 5 im Wesentlichen parallel zur Längsachse der Achse 2 in einer Grundposition angeordnet ist. Das Zentralstrebenelement 3 ist ein Teil der Fahrzeug-Achsaufhängung 1, welches die Achse 2 mit dem Fahrzeugrahmen 4 schwenkbar verbindet, da das Zentralstrebenelement 3 an dem zweiten Ende 32 mit dem Fahrzeugrahmen 4 gelenkig um eine Drehachse verschwenkbar verbunden ist. Das Zentralstrebenelement 3 kann insbesondere zentral, also mittig zu Achse 2, angeordnet sein. Die Drehachse des ersten Gelenkes 5 ist im Wesentlichen parallel zur Längsachse der Achse 2 in einer Grundposition der Fahrzeug-Achsaufhängung 1. Die Grundposition ist hierbei die Stellung der Fahrzeug-Achsaufhängung 1 auf einem ebenen und horizontalen Untergrund, wobei hier die Achse 2, und somit die Drehachse des ersten Gelenkes 5, horizontal angeordnet ist. Die Beweglichkeit der Achse 2 durch das erste Gelenk 5 wird in Fig. 3 und Fig. 8 durch einen Doppelpfeil angedeutet. Bei einem mehrachsigen Fahrzeug können dadurch Höhenunterschiede des Untergrundes bei den einzelnen Achsen 2 ausgeglichen werden.

Insbesondere kann vorgesehen sein, dass die Drehachse des ersten Gelenkes 5 normal zur Längserstreckung des Fahrzeugrahmens 4 angeordnet ist. Die Längserstreckung des Fahrzeugrahmens 4 kann als parallel zur Fahrtrichtung einer Geradeausfahrt Fahrzeuges angesehen werden.

Der Fahrzeugrahmen 4 beschreibt hier bevorzugt den tragenden Teil eines Fahrzeuges. Dieser Fahrzeugrahmen 4 kann beispielsweise ein Leiterrahmen oder Kastenrahmen sein. Bei einer selbsttragenden Karosserie kann der Fahrzeugrahmen 4 aber auch die tragenden Teile der Karosserie beschreiben. In Fig.1 bis Fig.10 sind lediglich Teile des Fahrzeugrahmens 4 dargestellt.

Weiters ist vorgesehen, dass die Achse 2 gegenüber dem ersten Gelenk 5 um ein zweites Gelenk 6 drehbar angeordnet ist, wobei die Drehachse des zweiten Gelenkes 6 im Wesentlichen normal zur Längsachse der Achse 2 angeordnet ist. Die Beweglichkeit der Achse 2 durch das zweite Gelenk 6 wird in Fig. 4 und Fig. 9 durch einen Doppelpfeil angedeutet.

Dadurch ergibt sich der Vorteil, dass eine vorteilhafte Fahrzeug-Achsaufhängung 1 bei guter Geländegängigkeit sehr robust und einfach ausgebildet sein kann. Eine besonders hohe Robustheit wird hierbei dadurch erreicht, dass zwei Gelenke 5,6 verwendet werden. Dadurch kann die Fahrzeug-Achsaufhängung 1 auf einfache Weise in zwei Richtungen verschwenkbar ausgebildet werden, wobei zwei separate Gelenke 5,6 im Vergleich zu einem einzigen Gelenk mit zwei Drehachsen einfacher und robuster ausgeführt werden können. Weiters kann durch die Lage der beiden Gelenke 5,6 die Kinematik der Fahrzeug-Achsaufhängung 1 gut vorgegeben werden. Durch die Verwendung zweier Gelenke 5,6 kann die Aufhängung der Achse 2 mittels des Zentralstrebenelementes 3 besonders platzsparrend erfolgen, wodurch eine etwaige Lenkbewegung der Räder nicht behindert, und dadurch ein besonders geringer Kurvenradius erreicht werden kann.

Besonders bevorzugt kann ein Anhänger mit wenigstens einer Fahrzeug-Achsaufhängung 1 vorgesehen sein. Solche Anhänger werden von einem anderen Fahrzeug gezogen. Derartige Anhänger können beispielsweise landwirtschaftliche Anhänger, insbesondere ein Ladewagen, sein. Ein landwirtschaftlicher Anhänger zum Transport eines Gülletanks verfügt beispielsweise über einen Leiterrahmen, während ein Ladewagen über eine selbsttragende Karosserie verfügt.

Das Zentralstrebenelement 3 kann insbesondere einstückig ausgebildet sein. Dadurch kann die Fahrzeug-Achsaufhängung 1 robust bei gleichzeitig geringen Gewicht ausgebildet werden.

Insbesondere kann der Winkel zwischen einer Längserstreckung des Zentralstrebenelementes 3 und der Längserstreckung des Fahrzeugrahmens 4 zwischen 45° und 15°, insbesondere zwischen 35° und 25°, betragen.

Das erste Gelenk 5 und/oder dass zweite Gelenk 6 können insbesondere als Drehgelenke ausgebildet sein, welche eine definierte Drehachse aufweisen und besonders robust und einfach ausgebildet sein können.

Gemäß dem Beispiel in Fig.1 bis Fig.5 kann vorgesehen sein, dass die Verbindung des Zentralstrebenelementes 3 mit der Achse 2 als zweites Gelenk 6 ausgebildet ist. Mit anderen Worten kann vorgesehen sein, dass das zweite Gelenk 6 am ersten Ende 31 des Zentralstrebenelementes 3 angeordnet ist.

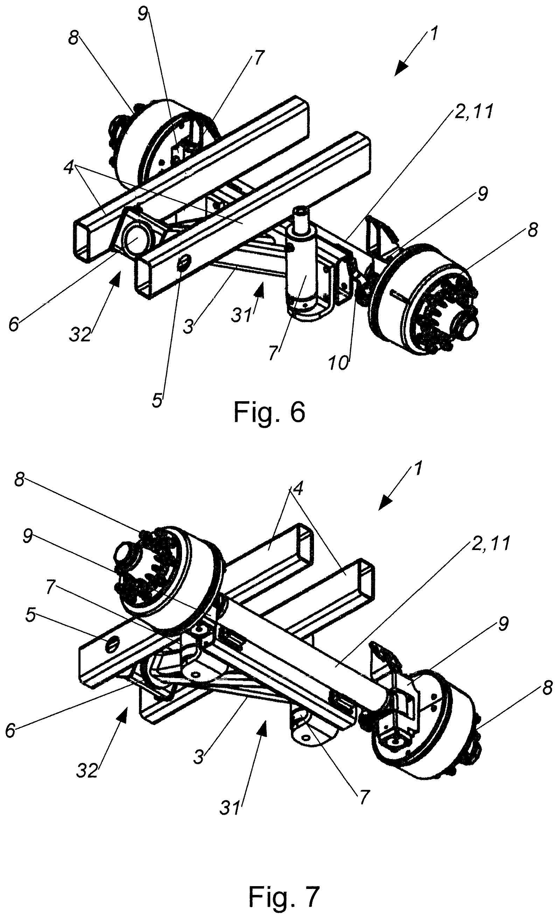

Gemäß der bevorzugten Ausführungsform in Fig.6 bis Fig.7 kann alternativ vorgesehen sein, dass das zweite Gelenk 6 im Bereich des ersten Gelenks 5 ausgebildet ist. Mit anderen Worten kann alternativ vorgesehen sein, dass das zweite Gelenk 6 am zweiten Ende 32 des Zentralstrebenelementes 3 angeordnet ist.

Durch diese unterschiedliche Positionierung des zweiten Gelenks 6 im Bezug zum ersten Gelenk 5, kann in vorteilhafter Weise die Bewegungsfähigkeit der Achse 2 vorgegeben werden.

Gemäß dem Beispiel kann vorgesehen sein, dass die Drehachse des zweiten Gelenks 6 im Wesentlichen parallel zur Längserstreckung des Fahrzeugrahmens 4 angeordnet ist. Dadurch ermöglicht das zweite Gelenk 6 im Wesentlichen eine Wankbewegung der Achse 2 quer zur Fahrtrichtung, wodurch auch bei stark schräger Achse 2 die Ebene der Räder noch immer in Fahrtrichtung weist. Dadurch können die Scherkräfte auf die Räder, und damit verbunden erhöhter Kraftverbrauch und Verschleiß, gering gehalten werden. Weiters kann dadurch auch bei einer Fahrt auf einer stark schrägen Ebene eine hohe Radaufstandsfläche erreicht werden, wodurch ein seitliches Abrutschen des Fahrzeuges auf einer schrägen Ebene verhindert werden kann.

Gemäß der bevorzugten Ausführungsform kann vorgesehen sein, dass die Drehachse des zweiten Gelenkes 6 die Drehachse des ersten Gelenkes 5 im Wesentlichen schneidet. Mit anderen Worten, dass die Drehachse des zweiten Gelenkes 6 in Richtung des ersten Gelenkes 5 weist. Dadurch kann die Fahrzeug-Achsaufhängung 1 besonders einfach, robust und platzschonend ausgebildet sein.

Die Orientierung der Drehachse des zweiten Gelenkes 2 in dem Beispiel kann aber auch mit der Lage des zweiten Gelenkes 2 der bevorzugten Ausführungsform kombiniert werden, und umgekehrt.

Weiters kann insbesondere vorgesehen sein, dass die Achse 2 mittels wenigstens zwei Feder-Dämpfersystemen 7 mit dem Fahrzeugrahmen 4 verbunden ist. Dadurch kann eine stabile und gefederte Dreipunktaufhängung der Achse 2 erreicht werden. Insbesondere kann vorgesehen sein, dass die Verbindung zwischen Achse 2 und Zentralstrebenelement 3 im Bereich zwischen wenigstens zwei Feder-Dämpfersystemen 7 angeordnet ist. Also, dass die Feder-Dämpfersysteme 7 beidseitig von dem Bereich der Verbindung zwischen Achse 2 und Zentralstrebenelement 3, insbesondere im Bereich der Räder, angeordnet sind, wodurch die Feder-Dämpfersysteme 7 im Einsatz lediglich Druckbelastungen und keinen Zugbelastungen ausgesetzt sind. Weiters können die Feder-Dämpfersysteme 7 insbesondere gelenkig mit der Achse 2 verbunden sein.

Bevorzugt kann vorgesehen sein, dass die Achse 2 als Lenkachse ausgebildet ist. Dadurch kann ein kann ein Fahrzeug mit wenigstens einer derartigen Fahrzeug-Achsaufhängung 1 lenkbar ausgebildet sein.

Insbesondere kann die Lenkachse als Achsschenkellenkung ausgebildet sein. Hierfür kann die Achse 2 im Bereich der Räder gelenkig angeordnete Lenkhebel 9, an welchen Lenkhebeln 9 die Felgen 8 angeordnet sind, und eine diese Lenkhebel 9 gelenkig verbindenden Achskörper 11 aufweisen. Die Lenkhebel 9 können weiters mittels Spurhebel 10 mit einer Spurstange gelenkig verbunden sein. Bei einem Anhänger kann die Lenkachse beispielsweise als nachlaufende Achse 2 ausgebildet, oder mittels einer Zwangslenkung steuerbar ausgebildet sein.

Bei landwirtschaftlichen Anhängern werden bevorzugt Räder mit großen Durchmessern verwendet, um eine gute Geländegängigkeit und eine Schonung der landwirtschaftlichen Flächen zu erreichen. Durch die zentrale Anordnung des Zentralstrebenelementes 3 kann ein besonders hoher maximaler Einschlagwinkel der als Lenkachse ausgebildeten Achse 2 auch bei Rädern mit großen Durchmessern erreicht werden, da einer Lenkbewegung des Rades durch das zentral angeordnete Zentralstrebenelement 3 ein großer Raum zur Verfügung steht.

Bei einem Anhänger kann insbesondere vorgesehen sein, dass die Achse 2 der wenigstens einen Fahrzeug-Achsaufhängung 1 als Lenkachse ausgebildet ist, dass wenigstens jeweils ein Rad an den gegenüberliegenden Enden der Achse 2 angebracht ist, und dass ein maximaler Einschlagwinkel der Räder größer als 30°, insbesondere größer als 40°, ist. Der Einschlagwinkel ist hierbei der Winkel zwischen der Längsachse des Fahrzeugrahmens 4, welcher durch die vorgesehene Fahrtrichtung angesehen werden kann, und der Radebene eines an der Achse 2 angebrachten Rades. Dadurch kann ein Gespann umfassend ein Zugfahrzeug und einen derartigen Anhänger einen besonders geringen Kurvenradius aufweisen.

Insbesondere kann vorgesehen sein, dass der Quotient von der Länge der Achse 2 durch den Durchmesser der an der Achse 2 angebrachten Räder größer als 0,5, insbesondere größer als 0,75, ist. Der Quotient gibt das Verhältnis der Größe der Räder im Vergleich zu Größe der Fahrzeug-Achsaufhängung 1, hier definiert durch die Länge der Achse 2, an. Als Länge der Achse 2 wird in diesem Zusammenhang der Abstand zwischen den an den gegenüberliegenden Enden der Achse 2 angeordneten Rädern angesehen, wobei bei einer Mehrfachbereifung, beispielsweise Doppelbereifung, die beiden innersten Räder heranzuziehen sind. Dadurch kann ein Anhänger mit wenigstens einer Lenkachse bereitgestellt werden, welcher im Vergleich Größe des Anhängers große Räder aufweist, aber dennoch einen vergleichsweise geringen Kurvenradius aufweist.

Alternativ kann vorgesehen sein, dass der Quotient von der Spurweite der Achse 2 durch den Durchmesser der an der Achse 2 angebrachten Räder größer als 0,5, insbesondere größer als 0,75, ist. Die Spurweite ist hierbei der Abstand zwischen den Mittelpunkten der an den gegenüberliegenden Enden der Achse 2 angeordneten Rädern. Bei einer Mehrfachbereifung, beispielsweise Doppelbereifung, ist die Spurweite der Abstand zwischen den Mittelpunkten der Mehrfachbereifung an den gegenüberliegenden Enden der Achse 2.

## Patentansprüche

1. Fahrzeug-Achsaufhängung (1) mit einer Achse (2) zur Aufnahme jeweils wenigstens eines Rades an gegenüberliegenden Enden, wobei ein erstes Ende (31) eines Zentralstrebenelementes (3) mit der Achse (2) verbunden ist und ein dem ersten Ende (31) gegenüberliegendes zweites Ende (32) des Zentralstrebenelementes (3) mit einem Fahrzeugrahmen (4) ein erstes Gelenk (5) ausbildend verbunden ist, wobei die Drehachse des ersten Gelenkes (5) im Wesentlichen parallel zur Längsachse der Achse (2) in einer Grundposition angeordnet ist, wobei die Achse (2) gegenüber dem ersten Gelenk (5) um ein zweites Gelenk (6) drehbar angeordnet ist, wobei das erste Gelenk (5) und das zweite Gelenk (6) als Drehgelenke ausgebildet sind, und wobei die Drehachse des zweiten Gelenkes (6) im Wesentlichen normal zur Längsachse der Achse (2) angeordnet ist, **dadurch gekennzeichnet, dass** das zweite Gelenk (6) am zweiten Ende (32) des Zentralstrebenelementes (3) angeordnet ist.

2. Fahrzeug-Achsaufhängung (1) nach Anspruch 1, **dadurch gekennzeichnet, dass** die Drehachse des zweiten Gelenkes (6) die Drehachse des ersten Gelenkes (5) im Wesentlichen schneidet.

3. Fahrzeug-Achsaufhängung (1) nach einem der Ansprüche 1 oder 2, **dadurch gekennzeichnet, dass** die Achse (2) mittels wenigstens zwei Feder-Dämpfersystemen (7) mit dem Fahrzeugrahmen 4 verbunden ist.

4. Fahrzeug-Achsaufhängung (1) nach einem der Ansprüche 1 bis 3, **dadurch gekennzeichnet, dass** die Achse (2) als Lenkachse ausgebildet ist.

5. Anhänger mit wenigstens einer Fahrzeug-Achsaufhängung (1) nach einem der Ansprüche 1 bis 4.

6. Anhänger nach Anspruch 5, **dadurch gekennzeichnet, dass** die Achse (2) der wenigstens einen Fahrzeug-Achsaufhängung (1) als Lenkachse ausgebildet ist, dass wenigstens jeweils ein Rad an den gegenüberliegenden Enden der Achse (2) angebracht ist, und dass ein maximaler Einschlagwinkel der Räder größer als 30°, insbesondere größer als 40°, ist.

7. Anhänger nach Anspruch 6, **dadurch gekennzeichnet, dass** der Quotient von der Länge der Achse (2) durch den Durchmesser der an der Achse (2) angebrachten Räder größer als 0,5, insbesondere größer als 0,75, ist.

## Claims

1. A vehicle axle suspension (1) having an axle (2) for accommodating at least one wheel on each of the opposing ends, wherein a first end (31) of a central strut element (3) is connected to the axle (2) and a second end (32) of the central strut element (3), which is opposite to the first end (31), is connected to a vehicle frame (4) to form a first joint (5), wherein the rotational axis of the first joint (5) is arranged substantially parallel to longitudinal axis of the axle (2) in a base position, wherein the axle (2) is arranged so it is rotatable in relation to the first joint (5) about a second joint (6), wherein the first joint (5) and the second joint (6) are designed as pivot joints, and wherein the rotational axis of the second joint (6) is arranged substantially perpendicularly in relation to the longitudinal axis of the axle (2), **characterized in that** the second joint (6) is arranged at the second end (32) of the central strut element (3).

2. The vehicle axle suspension (1) according to Claim 1, **characterized in that** the rotational axis of the second joint (6) substantially intersects the rotational axis of the first joint (5).

3. The vehicle axle suspension (1) according to any one of Claims 1 or 2, **characterized in that** the axle (2) is connected to the vehicle frame (4) by means of at least two spring damper systems (7).

4. The vehicle axle suspension (1) according to any one of Claims 1 to 3, **characterized in that** the axle (2) is designed as a steering axle.

5. A trailer having at least one vehicle axle suspension (1) according to any one of Claims 1 to 4.

6. The trailer according to Claim 5, **characterized in that** the axle (2) of the at least one vehicle axle suspension (1) is designed as a steering axle, at least one wheel is attached at each of the opposite ends of the axle (2), and a maximum steering angle of the wheels is greater than 30°, in particular greater than 40°.

7. The trailer according to Claim 6, **characterized in that** the quotient of the length of the axle (2) divided by the diameter of the wheels attached to the axle (2) is greater than 0.5, in particular greater than 0.75.

## Revendications

1. Suspension d'essieu de véhicule (1) avec un essieu (2) destiné à recevoir au moins une roue à chacune de ses extrémités opposées, une première extrémité (31) d'un élément formant jambe de force central (3) étant reliée à l'essieu (2) et une deuxième extrémité (32) de l'élément formant jambe de force central (3) opposée à la première extrémité (31) étant reliée à un châssis de véhicule (4) en formant une première articulation (5), l'axe de rotation de la première articulation (5) étant disposé de façon sensiblement parallèle à celui de l'essieu (2) dans sa position de base, l'essieu (2) pouvant tourner par rapport à la première articulation (5) autour d'une deuxième articulation (6), la première articulation (5) et la deuxième articulation (6) étant conformées comme des articulations pivotantes et l'axe de rotation de la deuxième articulation (6) étant sensiblement perpendiculaire à l'axe longitudinal de l'essieu (2), **caractérisée en ce que** la deuxième articulation (6) est disposée à la deuxième extrémité (32) de l'élément formant jambe de force central (3).

2. Suspension d'essieu de véhicule (1) selon la revendication 1, **caractérisée en ce que** l'axe de rotation de la deuxième articulation (6) coupe sensiblement l'axe de rotation de la première articulation (5).

3. Suspension d'essieu de véhicule (1) selon l'une des revendications 1 ou 2, **caractérisée en ce que** l'essieu (2) est relié au châssis de véhicule (4) au moyen d'au moins deux systèmes d'amortisseurs à ressort (7).

4. Suspension d'essieu de véhicule (1) selon l'une des revendications 1 à 3, **caractérisée en ce que** l'essieu (2) est réalisé comme un essieu directeur.

5. Remorque avec au moins une suspension d'essieu de véhicule (1) selon l'une des revendications 1 à 4.

6. Remorque selon la revendication 5, **caractérisée en ce que** l'essieu (2) de l'au moins une suspension d'essieu de véhicule (1) est réalisé comme un essieu directeur, **en ce qu'**au moins une roue est disposée à chacune des extrémités opposées de l'essieu (2) et **en ce qu'**un angle de braquage maximal des roues est supérieur à 30°, en particulier supérieur à 40°.

7. Remorque selon la revendication 6, **caractérisée en ce que** le quotient de la longueur de l'essieu (2) par le diamètre des roues disposées sur l'essieu (2) est plus grand que 0,5, de préférence plus grand que 0,75.
